# EUROPEAN PATENT SPECIFICATION

(11) **EP 2 656 683 B1**
(45) Date of publication and mention of the grant of the patent: **06.06.2018**
(21) Application number: 11805356.0
(22) Date of filing: 19.12.2011
(51) Int. Cl.: H04W 88/16, H04W 4/10, H04W 12/02, H04W 12/04, H04W 84/08, H04W 92/18, H04L 29/06

(54) **METHOD TO MAINTAIN END-TO-END ENCRYPTED CALLS THROUGH A TETRA TMO-DMO GATEWAY WHEN USING SUPER GROUPS**
VERFAHREN ZUR BEWAHRUNG VON VERSCHLÜSSELTEN END-TO-END -ANRUFEN ÜBER EINEN TETRA-TMO-DMO-GATEWAY BEI VERWENDUNG VON SUPERGRUPPEN
PROCÉDÉ DE MAINTIEN D'APPELS CRYPTÉS DE BOUT EN BOUT À TRAVERS UNE PASSERELLE TÉTRA TMO DMO LORS DE L'UTILISATION DE SUPER-GROUPES

(30) Priority: 20.12.2010 US 972987
(43) Date of publication of application: 30.10.2013
(73) Proprietor: Motorola Solutions, Inc., Chicago, IL 60661 (US)
(72) Inventor: WEALLEANS, Mark J.,, Basingstoke Hampshire RG22 4PD (GB); DIAO, Hui,, DK-2000 Frederiksberg (DK); PEDERSEN, Kristian Gronkjaer,, DK-3500 Vaerlose (DK)
(74) Representative: Treleven, Colin
(86) International application number: PCT/US2011/065819
(87) International publication number: WO 2012/087922

(56) References cited:
- US-A1- 2010 142 434
- "Terrestrial Trunked Radio (TETRA); Voice plus Data (V+D); Designers' guide; Part 3: Direct Mode Operation (DMO)", TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V1.3.3, 1 June 2009 (2009-06-01), XP014044418,
- "Terrestrial Trunked Radio (TETRA); Technical requirements for Direct Mode Operation (DMO); Part 1: General network design", ETSI DRAFT; 08196V121, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V1.2.1, 24 July 2009 (2009-07-24), pages 1-44, XP014053711, [retrieved on 2009-07-24]

## Description

### FIELD OF THE INVENTION

The present invention relates generally to a method to maintain end-to-end encrypted calls in a communications system. In particular, the invention relates to a method to maintain end-to-end encrypted calls through a TErrestrial Trunked Radio (TETRA) gateway when using super groups in a communications system.

### BACKGROUND

Wireless communications devices, such as cellular phones, may use a communications network, such as a cellular network, to route communications from an originating wireless communications device (originating device) to a target wireless communications device (target device). Some wireless communications devices are able to directly communicate with each other without the use of an infrastructure, such as a communications network. Often times, this direct communication is used for short-range 'push-to-talk' type communications. Wireless devices that are able to directly communicate with each other without the use of an infrastructure are known herein as back-to-back communications devices and wireless devices that use an infrastructure to communicate with each other are known herein as networked communications devices.

In some communications systems, known herein as mixed-mode communications systems, it is desirable to have both back-to-back communications devices and networked communications devices which are able to communicate with each other through a gateway. In some mixed-mode communications systems, the various wireless communications devices communicate with each other using a communications protocol, such as a TErrestrial Trunked Radio (TETRA) protocol or a Dimetra TETRA protocol. The TETRA protocol was specifically designed for use by government agencies, emergency services, (police forces, fire departments, ambulance), rail transportation staff, transport services and military agencies. The common mode of operation for users of TETRA is in a group calling mode in which a single button push connects a wireless communications device to other wireless communications devices in a selected talk group (also referred to as a group).

Within a mixed-mode communications system, back-to-back communications devices communicate using Direct Mode Operation (DMO) within a DMO Switching and Management Infrastructure (SwMI) and networked communications devices communicate using Trunked Mode Operation (TMO) within a TMO Switching and Management Infrastructure (SwMI). Using DMO allows for using back-to-back communications devices to be used as relays for a communication and also allows for direct communications between a pair of back-to-back communications devices in situations where network coverage is not available. A gateway is used which allows back-to-back communications devices communicating using Direct Mode Operation to receive information from and transmit information to networked communications devices communicating using Trunked Mode Operation by routing information from a TMO address to a DMO address. An address is a specific frequency or channel through which information is routed in a mixed-mode communications system.

For protection against eavesdropping, air interface encryption and end-to-end encryption is available within some mixed-mode communications system. Air interface encryption encrypts information transmitted from an originating device to a communications network. The communications network then decrypts the information and transmits unencrypted information to a target device. End-to-end encryption encrypts information transmitted from an originating device all the way to a target device. In either type of encryption, an encryption key is used in order to decrypt transmitted information. The encryption key used at both the originating device generates the information and encrypts it, along with at the target device or communications network that receives the encrypted information and is to decrypt it.

When information is transmitted using end-to-end encryption to a back-to-back communications device that is connected to the communications network via a gateway, encryption keys are associated with or mapped to specific addresses or channels on which the encrypted information is sent. Each back-to-back and each networked communications device within the mixed-mode communications system includes this mapping, which is used for communications within a group.

Talk groups are groups of a plurality of wireless communications devices any one of which is able to send information received by all wireless communications devices within that group. Each talk group operates on a unique predetermined address, frequency, or channel. As a result, if an originating device is broadcasting encrypted information in a first talk group, the encrypted information is broadcast using a first channel associated with a first encryption key. Any target device that is part of the first talk group receives encrypted information only on the first channel, and therefore is able to decrypt the encrypted information using the first encryption key. Mapping an encryption key to a specific address or channel associated with a talk group allows for information to be transmitted using end-to-end encryption to a back-to-back communications device.

One problem that arises within a mixed-mode communications system occurs when needing to communicate, using end-to-end encryption, between a back-to-back communications device and a networked communications device through a gateway; as the addresses may be different on each side of the gateway. If all addresses are known then encryption keys may be assigned to allow communications to be maintained through the gateway. In some cases, a temporary address is assigned by the network when wireless communications devices are trying to communicate with each other within a super group. A super group is defined as the combination of multiple talk groups, each containing one or more communications devices, that are joined together to form a new group. To form the super group a new group assignment is sent to each group that is to belong to the super group. The assignment contains a new temporary group address. When the super group terminates, the original talk groups once again communicate using the previously assigned addresses. When part of a super group, wireless communications devices can communicate and send information received by all wireless communications devices within that group. Each super group operates on a temporarily assigned address, frequency, or channel and is used when communication between multiple talk groups is desired. However, back-to-back communications devices may be unaware of the temporary address used by the super group, since back-to-back communications devices are not directly connected to the communications network and only receive information retransmitted from the gateway. As a result, when transmitting information using end-to-end encryption to a back-to-back communications device within a super group, the back-to-back communications device is unable to know what temporary channel is being used, and since the information sent is being encrypted, the information cannot be unencrypted. An arrangement known from US2010/0142434 A1 provides end-to-end encryption, and end-to-end encrypted synchronization. A gateway may be able to support gateway or repeater operation, or to support direct mode calls. Group calls are possible.

As a result, it would be desirable within a communications system which includes both back-to-back communications devices and networked communications devices, to send information to and receive information from a back-to-back communications device using end-to-end encryption with a temporary address.

### SUMMARY

The invention comprises a method in accordance with appended claim 1, and a system in accordance with appended claim 14. In one aspect, a method for transmitting end-to-end encrypted super group information is provided. Temporary address data that identifies a temporary address used for a super group is transmitted from a gateway to a back-to-back communications device. The gateway provides a connection between the back-to-back communications device and a trunked switching and management infrastructure. An encryption key associated with the temporary address is retrieved from storage in the back-to-back communications device. Encrypted super group information is decrypted at the back-to-back communications device
using the encryption key retrieved from storage to permit end-to-end encryption of the super group information.

In another aspect, a networked communications device within a TMO Switching and Management Infrastructure initiates a super group communication. The temporary address data is transmitted from the TMO Switching and Management Infrastructure to the gateway and from the gateway to the back-to-back communications device. The back-to-back communications device replaces an original encryption key associated with an address used prior to receiving the temporary address with a super group encryption key associated with the temporary address. The super group information is then communicated between the back-to-back communications device and the networked communications device using the super group encryption key.

The scope of the present invention is defined solely by the appended claims and is not affected by the statements within this summary.

### BRIEF DESCRIPTION OF THE DRAWINGS

The invention can be better understood with reference to the following drawings and description. The components in the figures are not necessarily to scale, emphasis instead being placed upon illustrating the principles of the invention.
FIG. 1 depicts a block schematic diagram of an exemplary computing system, in accordance with one embodiment of the present invention.
FIG. 2 depicts an illustration of a mixed-mode communications system having a back-to-back communications device and a networked communications device which are able to communicate with each other through a gateway, in accordance with one embodiment of the present invention.
FIG. 3 depicts a flowchart illustration of methods, apparatus (systems) and computer program products, in accordance with one embodiment of the present invention.

### DETAILED DESCRIPTION

In the description that follows, the subject matter of the application will be described with reference to acts and symbolic representations of operations that are performed by one or more electronic devices, unless indicated otherwise. However, although the subject matter of the application is being described in the foregoing context, it is not meant to be limiting as those skilled in the art will appreciate that some of the acts and operations described hereinafter can also be implemented in hardware, software, and/or firmware and/or some combination thereof.

The present invention makes use of a gateway to transmit temporary address data, which identifies a temporary address on which information is being transmitted by a networked communications device, from the gateway to a back-to-back communications device. Using the temporary address data, the back-to-back communications device is made aware that information is being transmitted by the networked communications device using end-to-end encryption on the temporary address. The back-to-back communications device retrieves an encryption key which is associated with the temporary address using a look-up table and then uses the retrieved encryption key to decrypt the information. As a result, in a communications system which includes both back-to-back communications devices and networked communications devices, information may be sent to or received from a back-to-back communications device using end-to-end encryption with a temporary address.

In the description that follows, the subject matter of the application will be described with reference to acts and symbolic representations of operations that are performed by one or more computers, unless indicated otherwise. As such, it will be understood that such acts and operations, which are at times referred to as being computer-executed, include the manipulation by the processing unit of the computer of electrical signals representing data in a structured form. This manipulation transforms the data or maintains it at locations in the memory system of the computer which reconfigures or otherwise alters the operation of the computer in a manner well understood by those skilled in the art. The data structures where data is maintained are physical locations of the memory that have particular properties defined by the format of the data. However, although the subject matter of the application is being described in the foregoing context, it is not meant to be limiting as those skilled in the art will appreciate that some of the acts and operations described hereinafter can also be implemented in hardware, software, and/or firmware and/or some combination thereof.

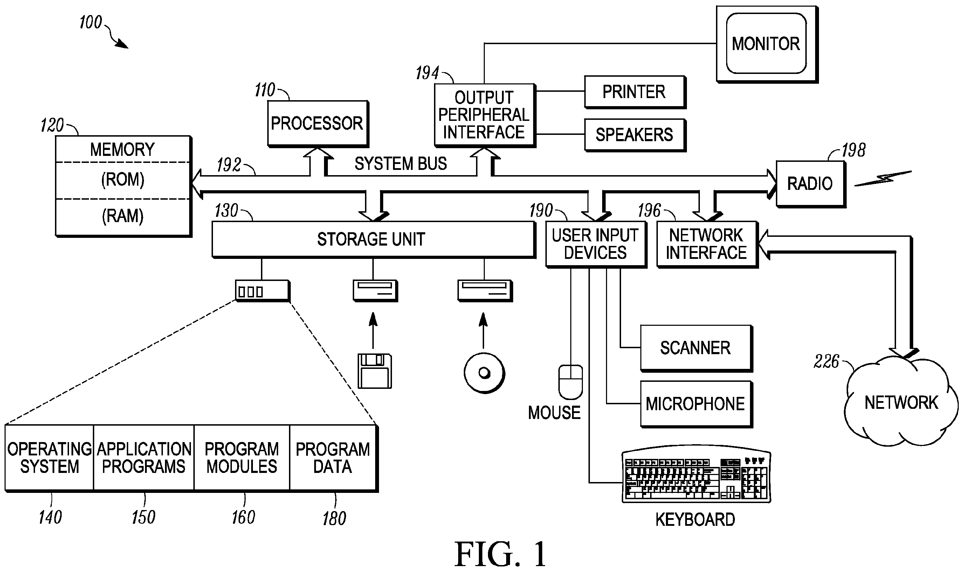

With reference to FIG. 1, depicted is an exemplary communications device 100, which could be any device which can be used to receive, store, process, and transmit information, including devices such as a wireless communications device, a back-to-back communications device, a networked communication device, or a gateway. Communications device 100 may be a portable device, wherein at least some or all of its components are formed together in a single device which can be carried around by a person. The communications device 100 includes a processor 110, memory 120 and one or more storage units 130. The storage units 130 and their associated computer readable memory medium provide storage of computer readable instructions, data structures, program modules and other data for the communications device 100. Storage units 130 can store the contents of an operating system 140, application programs 150, program modules 160, and program data 180. Communications device 100 further includes input devices 190 through which data may enter the communications device 100, either automatically or by a user who enters commands and data. Input devices 190 can include an electronic digitizer, a electronic scanner, a barcode reader, a microphone, a camera, a video camera, a keyboard and a pointing device, a trackball, a touch pad, any USB enabled device, any Bluetooth enabled device, an RFID or NFC device, and a debit card reader. Other input devices may include a joystick, game pad, an antenna, and the like.

These and other input devices 190 can be connected to processor 110 through a user input interface that is coupled to a system bus 192, but may be connected by other interface and bus structures, such as a parallel port, game port or a universal serial bus (USB). Communications device 100 may also include other peripheral output devices such as speakers, a printer, and a display device, which may be connected through an output peripheral interface 194 and the like.

Communications device 100 also includes a radio 198 or other type of communications device for wirelessly transmitting and receiving data for the communications device 100 with the aid of an antenna. Radio 198 may wirelessly transmit and receive data using WiMAX™, 802.11a/b/g/n, Bluetooth™, 2G, 2.5G, 3G, and 4G, LTE, CDMA, TDMA, GSM, and other wireless protocols. Communications device 100 may operate in a networked environment using logical connections to one or more remote communications devices 100.

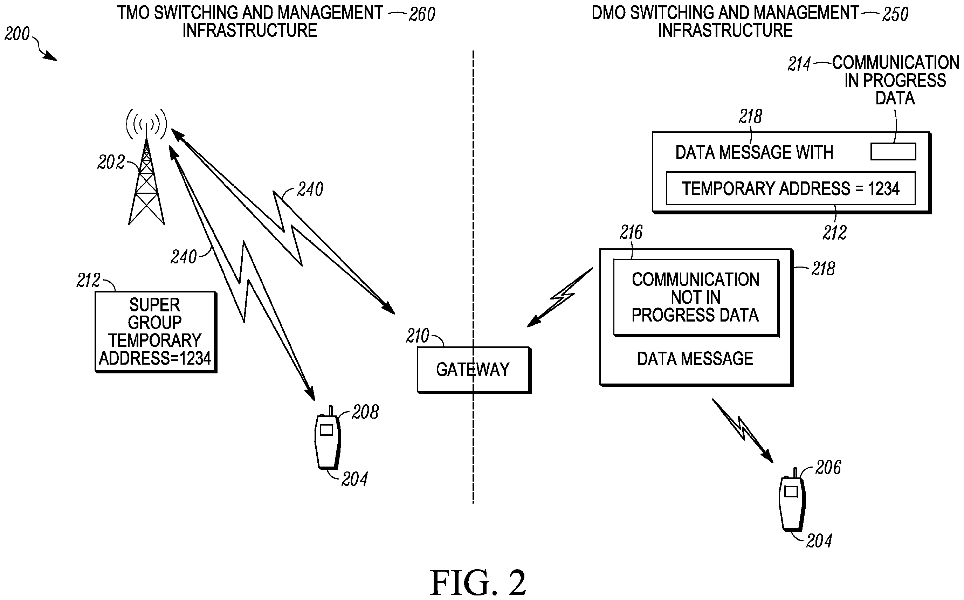

With reference to FIG. 2, depicted is a mixed-mode communications system 200 having a back-to-back communications device 206 and a networked communications device 208 that are able to communicate with each other through a gateway 210. Preferably, the communications system 200 uses a TETRA infrastructure wherein all the communications devices within the communications system 200, such as the back-to-back communications device 206, the networked communications device 208, and the gateway 210, all communicate with each other using a TETRA protocol, such as a Dimetra TETRA protocol. Preferably, communications system 200 is used to connect a variety of wireless communications devices 204, including back-to-back communications devices 206 and networked communications devices 208, to each other allowing for the exchange of information 240 between the wireless communications devices 204. A wireless communications device is any device which can transmit and receive information wirelessly, and includes any device having a radio, a radio receiver, and radio transmitter, or a radio transceiver.

Communications system 200 includes a communications network 202 used to send and receive information 240 between a pair of networked communications devices 208. Communications network 202 is a collection of computers and devices interconnected by communications channels that facilitate communications among users and allows users to share resources. The communications network 202 is directly connected with networked communications devices 208 and helps to facilitate the transfer of information 240 between a pair of networked communications devices 208.

Back-to-back communications device 206 is a wireless communications device able to directly communicate with another wireless communications device without the use of the communications network 202. Oftentimes, this direct communication is used for short-range 'push-to-talk' type communications. Back-to-back communications device 206 includes 'push-to-talk' type devices, walkie-talkies, and other short range wireless communications devices 204 which transmit information 240 to each other without using communications network 202.

Networked communications device 208 is a wireless communications device that uses communications network 202 in order to communicate with another wireless communications device. As a result, networked communications devices 208 are able to transmit information 240 to and communicate with wireless communications devices 204 for which the trunked mode of operation is desirable, e.g., devices that are far enough from each other to not be able to communicate through direct mode (e.g., greater than several kilometers). Networked communications devices 208 include cellular phones, smart phones, pagers, and other long range wireless communications devices 204 that transmit information 240 to each other using communications network 202.

Back-to-back communications devices 206 communicate using Direct Mode Operation (DMO) within a DMO Switching and Management Infrastructure (SwMI) 250 and networked communications devices 208 communicate using Trunked Mode Operation (TMO) within a TMO Switching and Management Infrastructure 260. The back-to-back communications device 206 is able to communicate with (send information 240 to and receive information 240 from) networked communications device 208 through gateway 210.

Gateway 210 is a network node equipped for interfacing between the DMO Switching and Management Infrastructure 250 and the TMO Switching and Management Infrastructure 260, and between the various protocols used within each infrastructure. Preferably, gateway 210 includes devices such as protocol translators, impedance matching devices, rate converters, fault isolators, or signal translators as necessary to provide system interoperability between the DMO and the TMO Switching and Management Infrastructures 250, 260. Gateway 210 is connected with both the networked communications devices 208 via communications network 202 and the back-to-back communications devices 206. Gateway 210 allows back-to-back communications devices 206 communicating using Direct Mode Operation to receive information 240 from and transmit information 240 to networked communications devices 208 communicating using Trunked Mode Operation by routing information 240 from a TMO address to a DMO address. An address is a specific frequency or channel through which information 240 is routed in mixed-mode communications system 200.

Information 240 includes any type of data which can be sent within a communications system 200, such as text messages, voice or audio messages, pictures, video, text, and any other data which can be transmitted. For protection against eavesdropping, communications system 200 employs air interface encryption and end-to-end encryption to make information 240 unreadable to anyone except those possessing an encryption key. Air interface encryption encrypts information 240 transmitted from any originating wireless communications device to communications network 202. The communications network 202 then decrypts the information 240 and transmits unencrypted information to a target wireless communications device. End-to-end encryption encrypts information 240 transmitted from an originating wireless communications device all the way to a target wireless communications device. In either type of encryption, an encryption key is used to decrypt any information 240 which is transmitted. The encryption key is used at both the originating wireless communications device that generates the information 240 and encrypts it, along with at the target wireless communications device or communications network that receives the encrypted information 240 and to decrypt the information 240.

Communications system 200 allows for communication between a group of wireless communications devices 204 called a talk group. A talk group is a group of a plurality of wireless communications devices 204 any one of which can communicate and send information which is received by all wireless communications devices 204 within that group. Each talk group operates on a unique predetermined address, frequency, or channel. For example, if an originating wireless communications device is broadcasting encrypted information 240 in a first talk group, the encrypted information 240 will be broadcast using a first channel associated with a first encryption key. Any target wireless communications device that is part of the first talk group receives encrypted information only on the first channel associated with the first encryption key, and therefore is able to decrypt the encrypted information using the first encryption key. Mapping an encryption key to a specific address or channel associated with a talk group allows for information to be transmitted using end-to-end encryption to back-to-back communications device 206 within communications system 200.

Communications system 200 also allows for communication between a group of wireless communications devices 204, which form a super group that contains multiple talk groups as defined previously. A super group is assigned to a selected number of wireless communications devices 204, any one of which can communicate and send information received by all wireless communications devices 204 within the super group. As above, each super group operates on a temporarily assigned address, frequency, or channel and is used when communication between multiple talk groups is desired. For example, a first wireless communications device may be in a first talk group communicating with other wireless devices within the first talk group using a first channel, while a second wireless communications device may be in a second talk group communicating with other wireless devices within the second talk group using a second channel. If communication between the first and second talk groups is desired, a super group that encompasses both the first and second talk groups may be formed by the communications system 200. A temporary address or channel is created when using a super group in order for communication between wireless communications devices 204 in the first and second talk groups to take place.

In order for the communications system 200 to transmit information 240 on a temporary address using end-to-end encryption between back-to-back communications device 206 and networked communications 208 when in a super group, the gateway 210 transmits temporary address data 212, which identifies the temporary address, to the back-to-back communications device 206. The temporary address is assigned by the TMO Switching and Management Infrastructure 260. Temporary address data 212 identifies the temporary address by providing an address number, a channel number on which information 240 using the temporary address is transmitted, a frequency number of a frequency at which a channel on which information 240 using the temporary address is transmitted, or other information that can identify the temporary address. The gateway 210, in one embodiment, receives the temporary address data 212 in a TETRA protocol message that includes trunked mode standard identification data.

In one embodiment, the gateway 210 transmits temporary address data 212 to the back-to-back communications device 206 in a data message 218. The data message 218 is any message transmitted by the gateway 210 that includes text, images, video, or other data, such as a text message, an SMS message, an MMS message, or a short data service message (SDS).

In another embodiment, the gateway 210 transmits temporary address data 212 to the back-to-back communications device 206 using a TETRA protocol message. The TETRA protocol message is any message transmitted by the gateway 210 that includes direct mode standard identification data, such as a DM-INFO message sent by the gateway 210 using the TETRA protocol. The DM-INFO message allows for a calling party address to be sent during call set up or periodically during a call. This address can be used to pass the temporary address data 212 to the back-to-back communications device 206 with an additional indication added by the gateway 210 to indicate that this address is a temporary address data 212 rather than the specified calling party address.

In one embodiment, the gateway 210 transmits communication in progress data 214, which indicates that a super group communication is currently in progress on the temporary address, to the back-to-back communications device 206. Preferably, the communication in progress data 214 is periodically transmitted to the back-to-back communications device 206. This allows for the back-to-back communications device 206, which just began communicating, to know that a super group communication is ongoing so that the back-to-back communications device 206 can revert to a previously selected encryption key used for talk group communications once the temporary address has been de-assigned and the super group communication has ended. Thus, the original talk group address (used by the back-to-back communications device 206) is inactivated and original encryption key deselected while a super group communication is ongoing and original talk group address is reactivated and original encryption key reselected after termination of the super group communication.

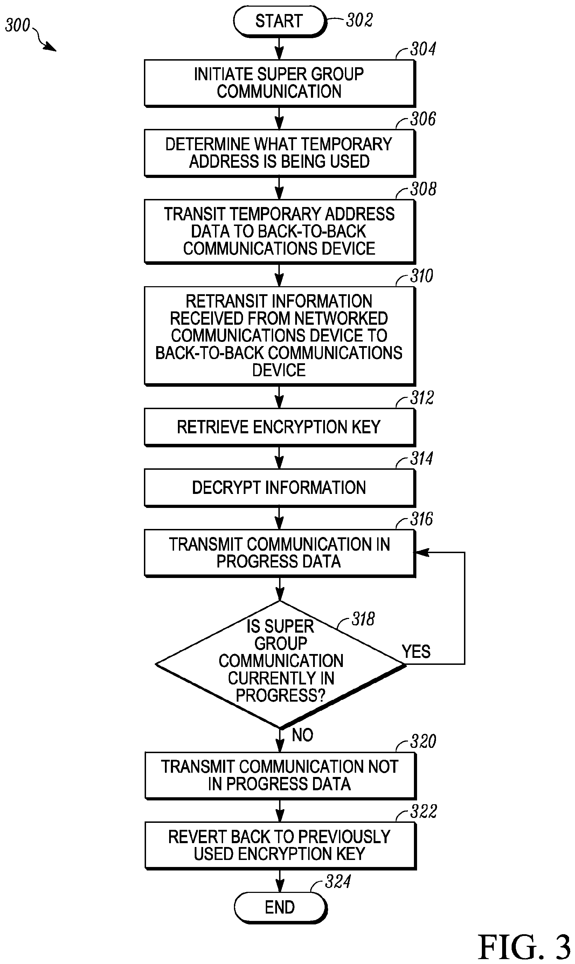

With reference to FIG. 3, in one embodiment, a method 300 for transmitting information 240 to the gateway 210 when using end-to-end encryption is initiated at block 302. Moving to block 304, a super group communication is initiated by a networked communications device within a TMO Switching and Management Infrastructure 260 and a temporary address is created on which information 240 is to be transmitted for conducting the super group communication. The infrastructure 260 sets up the super group communication. To do this, the infrastructure 260 passes the temporary address to all the communications devices within the communications system 200 that are to be part of the super group and therefore receive the super group communication. The communication devices 204 then receive and transmit all information to/from this temporary address until such time as the infrastructure de-assigns the temporary address from the devices.

Upon initiating the super group communication, information 240 is transmitted to networked communications device 208 on the temporary address. The information 240 is, in one embodiment, encrypted by networked communications device 208 so that end-to-end encryption is provided. Moving to block 306, the gateway 210 then determines that a super group communication is in progress and then determines what temporary address is being used by the networked communications device 208 within the TMO Switching and Management Infrastructure 260 to conduct the super group communication. The gateway 210 determines the temporary address being used by receiving temporary address data 212 from the communications network 202, e.g., by receiving information 240 via communications network 202. For example, the gateway 210 determines what temporary address is being used by receiving a Dynamic Group Number Assignment (DGNA) from the communications network 202 for a super group that has been created. The DGNA defines the temporary address data 212 used to communicate between devices.

Upon determining that a super group communication is in progress and what address that communication is using to transmit information 240, the gateway 210 then transmits temporary address data 212, which identifies the temporary address being used, to the back-to-back communications device 206 at block 308. Temporary address data 212 may be transmitted to the back-to-back communications device 206 in a number of ways. In one embodiment, temporary address data 212 is transmitted by a data message 218 which can be sent from the gateway 210 via a text messaging service to any back-to-back communications device 206 connected to the gateway 210 within the DMO Switching and Management Infrastructure 250. In one embodiment, to communicate the temporary address data 212, a unique Protocol Identifier is allocated to the text message to differentiate it from other text messages. For example, a text message may follow an ETSI defined format where a Protocol Identifier precedes the actual text data <protocol identifier> <data string>, e.g. <130> <sample text>. The Protocol Identifier defines how the following <data string> should be interpreted, e.g. display text on the screen or send the text to a different application. A unique Protocol Identifier can be assigned to indicate the <data string> is in fact a temporary address.

Moving to block 310, after transmitting temporary address data 212 to the back-to-back communications device 206, broadcast information 240 received from the networked communications device 208 by the gateway 210 is retransmitted to the back-to-back communications devices 206 within the DMO Switching and Management Infrastructure 250. Thus, in one embodiment, information 240, which is end-to-end encrypted, received by the gateway 210 from the network 202 is retransmitted to the back-to-back communications devices 206.

Moving to block 312, upon receiving broadcast information 240 from the gateway 210 at the back-to-back communications device 206, the back-to-back communications device 206 retrieves an encryption key that is associated with the temporary address 212 from information stored within a storage device in the back-to-back communications device 206, such as from a look-up table stored on flash memory in the back-to-back communications device 206. The back-to-back communications device 206 then decrypts broadcast information 240 using the encryption key at block 314.

Moving to block 316, the gateway 210 then transmits communication in progress data 214, which indicates that a super group communication is currently in progress on the temporary address, to the back-to-back communications device 206. Moving to block 318, the gateway 210 then decides whether or not the super group communication is still in progress. If the super group communication is not in progress anymore, then the gateway 210 transmits communication not in progress data 216, which indicates that a super group communication is not currently in progress on the temporary address, to the back-to-back communications device 206, at block 320. For example, communication in progress data 214 or communication not in progress data 216 in the case of a DM-INFO message may follow the format <Information Type> <Calling Party TSI> where the <Calling Party TSI> is the address of the calling device. To indicate the <Calling Party TSI> is a temporary address the <Information Type> set to a unique value. This indicates a super group communication is in progress. The value will be reset once the super group communication is finished and not in progress. In the <Protocol Identifier> scenario a text message will be sent when the super group communication is set up and released.

A gateway 210 may determine that a super group communication is not currently in progress by receiving an indication from the communications network 202, such as a Dynamic Group Number Assignment (DGNA) de-assignment of the temporary address data 212 for the super group communication.

Upon receiving the communication not in progress data 216, at block 322 the back-to-back communications device 206 stops using the encryption key allocated for temporary address 212 and reverts back to the previously used encryption key for the previous talk group communication which had been ongoing, and the method 300 ends at block 324. However, if the super group communication is still currently in progress, then the method 300 moves back to block 316.

Those having skill in the art will recognize that the state of the art has progressed to the point where there is little distinction left between hardware and software implementations of aspects of systems; the use of hardware or software is generally (but not always, in that in certain contexts the choice between hardware and software can become significant) a design choice representing cost vs. efficiency tradeoffs. Those having skill in the art will appreciate that there are various vehicles by which processes and/or systems and/or other technologies described herein can be effected (e.g., hardware, software, and/or firmware), and that the preferred vehicle will vary with the context in which the processes and/or systems and/or other technologies are deployed. For example, if an implementer determines that speed and accuracy are paramount, the implementer may opt for a mainly hardware and/or firmware vehicle; alternatively, if flexibility is paramount, the implementer may opt for a mainly software implementation; or, yet again alternatively, the implementer may opt for some combination of hardware, software, and/or firmware. Hence, there are several possible vehicles by which the processes and/or devices and/or other technologies described herein may be effected, none of which is inherently superior to the other in that any vehicle to be utilized is a choice dependent upon the context in which the vehicle will be deployed and the specific concerns (e.g., speed, flexibility, or predictability) of the implementer, any of which may vary. Those skilled in the art will recognize that optical aspects of implementations will typically employ optically-oriented hardware, software, and or firmware.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software, firmware, or virtually any combination thereof. In one embodiment, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the embodiments disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein are capable of being distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a computer readable memory medium such as a magnetic medium like a floppy disk, a hard disk drive, and magnetic tape; an optical medium like a Compact Disc (CD), a Digital Video Disk (DVD), and a Blu-ray Disc; computer memory like random access memory (RAM), flash memory, and read only memory (ROM); and a transmission type medium such as a digital and/or an analog communication medium like a fiber optic cable, a waveguide, a wired communications link, and a wireless communication link.

The herein described subject matter sometimes illustrates different components contained within, or connected with, different other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermediate components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

While particular aspects of the present subject matter described herein have been shown and described, it will be apparent to those skilled in the art that, based upon the teachings herein, changes and modifications may be made without departing from the invention, which is defined by the claims.

## Claims

1. A method for transmitting end-to-end encrypted super group information, the method comprising:
transmitting (308) temporary address data, which identifies a temporary address used for a super group, from a gateway (210) to a back-to-back communications device (206), the gateway providing a connection between the back-to-back communications device (206) and a trunked switching and management infrastructure (260), wherein the super group encompasses a plurality of talk groups, wherein the back-to-back communication device is a wireless communication device that is capable of communicating with another wireless communication device without using an infrastructure, wherein the temporary address data identifies a frequency or channel used for the super group, and wherein the back-to-back communication device is a member of a talk group of the plurality of talk groups having a talk group address different from the temporary address data;
retrieving (312) from storage in the back-to-back communications device (206) an encryption key associated with the temporary address, wherein the talk group address is associated with an encryption key different from the encryption key associated with the temporary address data;
replacing, by the back-to-back communications device (206), the talk group address and associated encryption key with the temporary address and associated encryption key for a super group communication;
decrypting (314) encrypted super group information at the back-to-back communications device (206) using the encryption key retrieved from storage to permit end-to-end encryption of the super group information, wherein super group information is any type of data that may be exchanged among wireless communication devices that are part of a super group; and
reverting (322), by the back-to-back communications device (206), back to the talk group address and associated encryption key from the temporary address and associated encryption key in response to termination of the super group communication.

2. The method of claim 1, wherein the temporary address data is transmitted in a data message.

3. The method of claim 2, wherein the data message is a text message.

4. The method of claim 3, wherein a unique protocol identifier is allocated to the text message to indicate a data string following the protocol identifier is the temporary address and thereby differentiate the text message from other text messages.

5. The method of claim 1, wherein the use of the temporary address is detected by the gateway (210) in a TETRA protocol message that includes trunked mode standard identification data.

6. The method of claim 1 further comprising receiving at the gateway (210) the temporary address data from the trunked switching and management infrastructure.

7. The method of claim 1 further comprising using a TETRA protocol message that includes direct mode standard identification data to transmit the temporary address used for the super group information to the back-to-back communications device (206).

8. The method of claim 1 further comprising retransmitting from the gateway (210) the end-to-end encrypted information on the temporary address only after transmitting the temporary address data.

9. The method of claim 1 further comprising the gateway (210) transmitting (316, 318, 320) to the back-to-back communications device (206) communication in progress data periodically while a super group communication is in progress and communication not in progress data to indicate termination of the super group communication.

10. The method of claim 9 wherein the communication in progress data and the communication not in progress data are DM-INFO messages in which an Information Type field is set to a unique value to indicate super group communication is in progress and is reset once the super group communication is not in progress.

11. A method (300) in accordance with claim 1, wherein the trunked switching and management infrastructure (260) comprises a Trunked Mode Operation, TMO, Switching and Management Infrastructure, wherein the gateway (210) comprises a gateway to the TMO Switching and Management Infrastructure, the method further comprising:
initiating (304) a super group communication by a networked communications device (208) within the Trunked Mode Operation, TMO, Switching and Management Infrastructure (260); transmitting (308) the temporary address data from the TMO Switching and Management Infrastructure to the gateway (210);
communicating (310), between the back-to-back communications device (206) and the networked communications device (208), super group information using the super group encryption key.

12. The method (300) of claim 11, further comprising retransmitting the encrypted super group information from the gateway only after transmitting the temporary address data.

13. The method (300) of claim 11, further comprising the back-to-back communications device (206) and the networked communications device (208) receiving (316, 318, 320):
(i) communication in progress data, periodically, while a super group communication is in progress; and
(ii) communication not in progress data, to indicate termination of the super group communication.

14. A system for transmitting end-to-end encrypted super group information, the system comprising:
a gateway (210) providing a connection between a back-to-back communications device (206) and a trunked switching and management infrastructure (260), the gateway configured to transmit temporary address data, which identifies a temporary address used for a super group, to the back-to-back communications device (206), wherein the super group encompasses a plurality of talk groups, wherein the back-to-back communication device is a wireless communication device that is capable of communicating with another wireless communication device without using an infrastructure and wherein the temporary address data identifies a frequency or channel used for the super group, and wherein the back-to-back communication device is a member of a talk group of the plurality of talk groups having a talk group address different from the temporary address;
the back-to-back communications device (206) being configured to:
retrieve (312) from storage an encryption key associated with the temporary address, wherein the talk group address is associated with an encryption key different from the encryption key associated with the temporary address;
replace the talk group address and associated encryption key with the temporary address and associated encryption key for a super group communication;
decrypt (314) encrypted super group information, using the encryption key retrieved from storage, to permit end-to-end encryption of the super group information, wherein super group information is any type of data that may be exchanged among wireless communication devices that are part of a super group; and
revert (322) back to the talk group address and associated encryption key from the temporary address and associated encryption key in response to termination of the super group communication.

## Patentansprüche

1. Verfahren zum Senden von Supergruppeninformation mit Ende-zu-Ende-Verschlüsselung, wobei das Verfahren umfasst:
Senden (308) temporärer Adressendaten, die eine für eine Supergruppe genutzte temporäre Adresse identifizieren, von einem Gateway (210) an ein Back-to-Back-Kommunikationsgerät (206), wobei das Gateway eine Verbindung zwischen dem Back-to-Back-Kommunikationsgerät (206) und einer Bündelfunk-Schalt- und -Managementinfrastruktur (260) zur Verfügung stellt, wobei die Supergruppe eine Vielzahl von Sprechgruppen umfasst, wobei das Back-to-Back-Kommunikationsgerät ein drahtloses Kommunikationsgerät ist, das geeignet ist, mit einem anderen Kommunikationsgerät ohne Nutzung einer Infrastruktur zu kommunizieren, wobei die temporären Adressendaten eine Frequenz oder einen Kanal identifizieren, die für die Supergruppe genutzt werden, und wobei das Back-to-Back-Kommunikationsgerät ein Mitglied einer Sprechgruppe der Vielzahl von Sprechgruppen ist, die eine Sprechgruppenadresse haben, welche sich von den temporären Adressendaten unterscheidet;
Wiedergewinnen (312) aus einem Speicher in dem Back-to-Back-Kommunikationsgerät (206) eines Verschlüsselungsschlüssels, der mit der temporären Adresse assoziiert ist, wobei die Sprechgruppenadresse mit einem Verschlüsselungsschlüssel assoziiert ist, der sich von dem Verschlüsselungsschlüssel unterscheidet, der mit den temporären Adressendaten assoziiert ist;
Ersetzen, durch das Back-to-Back-Kommunikationsgerät (206), der Sprechgruppenadresse und des assoziierten Verschlüsselungsschlüssels durch die temporäre Adresse und den assoziierten Verschlüsselungsschlüssel für eine Supergruppenkommunikation;
Entschlüsseln (314) verschlüsselter Supergruppeninformation an dem Back-to-Back-Kommunikationsgerät (206) unter Nutzung des Verschlüsselungsschlüssels, der von dem Speicher zurückgewonnen wurde, um eine Ende-zu-Ende-Verschlüsselung der Supergruppeninformation zu erlauben, wobei die Supergruppeninformation irgendein Typ von Daten ist, die zwischen drahtlosen Kommunikationsgeräten ausgetauscht werden können, die ein Teil einer Supergruppe sind; und
Zurückkehren (322), durch das Back-to-Back-Kommunikationsgerät (206), zu der Sprechgruppenadresse und zu dem assoziierten Verschlüsselungsschlüssel von der temporären Adresse und dem assoziierten Verschlüsselungsschlüssel in Reaktion auf ein Beenden der Supergruppenkommunikation.

2. Verfahren nach Anspruch 1, wobei die temporäre Adresse in einer Datennachricht gesendet wird.

3. Verfahren nach Anspruch 2, wobei die Datennachricht eine Textnachricht ist.

4. Verfahren nach Anspruch 3, wobei ein eindeutiger Protokollidentifizierer der Textnachricht zugeordnet ist, um anzuzeigen, dass ein Datenstring, der dem Protokollidentifizierer folgt, die temporäre Adresse ist, und damit die Textnachricht von anderen Nachrichten zu unterscheiden.

5. Verfahren nach Anspruch 1, wobei die Nutzung der temporären Adresse durch das Gateway (210) in einer TETRA-Protokollnachricht erfasst wird, die Bündelfunkmodusstandardidentifikationsdaten enthält.

6. Verfahren nach Anspruch 1, das weiterhin ein Empfangen der temporären Adressendaten an dem Gateway (210) von der Bündelfunk-Schalt- und -Managementinfrastruktur umfasst.

7. Verfahren nach Anspruch 1, das weiterhin ein Nutzen einer TETRA-Protokollnachricht nutzt, die Direktmodusstandardidentifikationsdaten enthält, um die temporäre Adresse zu senden, die für die Supergruppeninformation zu dem Back-to-Back-Kommunikationsgerät (206) genutzt wird.

8. Verfahren nach Anspruch 1, das weiterhin ein Neuübertragen der Ende-zu-Ende-verschlüsselten Information von dem Gateway (210) auf der temporären Adresse umfasst, nur nachdem die temporären Adressendaten gesendet wurden.

9. Verfahren nach Anspruch 1, das weiterhin umfasst, dass das Gateway (210) Kommunikation zu dem Back-to-Back-Kommunikationsgerät (206) sendet (316, 318, 320), periodisch in Fortschrittsdaten, während eine Supergruppenkommunikation stattfindet, und eine Kommunikation nicht in Fortschrittsdaten, um eine Beendigung der Supergruppenkommunikation anzuzeigen.

10. Verfahren nach Anspruch 9, wobei die Kommunikation in Fortschrittsdaten und die Kommunikation nicht in Fortschrittsdaten DM-INFO-Nachrichten sind, in denen ein Feld von einem Informationstyp auf einen eindeutigen Wert gesetzt wird, um anzuzeigen, dass die Supergruppenkommunikation fortschreitet und zurückgesetzt wird, sobald die Supergruppenkommunikation nicht fortschreitet.

11. Verfahren (300) nach Anspruch 1, wobei die Bündelfunk-Schalt- und -Managementinfrastruktur (260) eine Bündelfunkbetrieb-Schalt- und - Managementinfrastruktur ("Trunked Mode Operation" (TMO)) umfasst, wobei das Gateway (210) ein Gateway zu der TMO-Schalt- und -Managementinfrastruktur umfasst, wobei das Verfahren weiterhin umfasst:
Veranlassen (304) einer Supergruppenkommunikation durch ein Netzwerkkommunikationsgerät (208) innerhalb der TMO-Schalt- und - Managementinfrastruktur (260);
Senden (308) der temporären Adressendaten von der TMO-Schalt- und -Managementinfrastruktur an das Gateway;
Kommunizieren (310), zwischen dem Back-to-Back-Kommunikationsgerät (206) und dem Netzwerkkommunikationsgerät (208), von Supergruppeninformation unter Nutzung des Supergruppenverschlüsselungsschlüssels.

12. Verfahren (300) nach Anspruch 11, das weiterhin ein Neuübertragen der verschlüsselten Supergruppeninformation von dem Gateway nur nach dem Senden der temporären Adressendaten umfasst.

13. Verfahren (300) nach Anspruch 11, das weiterhin umfasst, dass das Back-to-Back-Kommunikationsgerät (206) und das Netzwerkkommunikationsgerät (208) folgendes empfangen (316, 318, 320):
(i) Kommunikation in periodischen Fortschrittsdaten, während eine Supergruppenkommunikation fortschreitet; und
(ii) Kommunikation nicht in Fortschrittsdaten, um eine Beendigung der Supergruppenkommunikation anzuzeigen.

14. System zu Senden von Supergruppeninformationen mit Ende-zu-Ende-Verschlüsselung, wobei das System umfasst:
ein Gateway (210), das eine Verbindung zwischen einem Back-to-Back-Kommunikationsgerät (206) und einer Bündelfunk-Schalt- und -Managementinfrastruktur (260) zur Verfügung stellt, wobei das Gateway konfiguriert ist, um temporäre Adressendaten zu senden, welche eine temporäre Adresse identifizieren, die für eine Supergruppe genutzt wird, zu dem Back-to-Back-Kommunikationsgerät (206), wobei die Supergruppe eine Vielzahl von Sprechgruppen umfasst, wobei das Back-to-Back-Kommunikationsgerät ein drahtloses Kommunikationsgerät ist, das in der Lage ist, mit einem anderen drahtlosen Kommunikationsgerät ohne Nutzung einer Infrastruktur zu kommunizieren, und wobei die temporären Adressendaten eine Frequenz oder einen Kanal identifizieren, die für die Supergruppe genutzt werden, und wobei das Back-to-Back-Kommunikationsgerät ein Mitglied einer Sprechgruppe aus der Vielzahl von Sprechgruppen ist, die Sprechgruppenadressen haben, die sich von der temporären Adresse unterscheiden;
wobei das Back-to-Back-Kommunikationsgerät (206) konfiguriert ist zum:
Wiedergewinnen (312) aus einem Speicher eines Verschlüsselungsschlüssels, der mit der temporären Adresse assoziiert ist, wobei die Sprechgruppenadresse mit einem Verschlüsselungsschlüssel assoziiert ist, der sich von dem Verschlüsselungsschlüssel unterscheidet, der mit den temporären Adressendaten assoziiert ist;
Ersetzen der Sprechgruppenadresse und des assoziierten Verschlüsselungsschlüssels durch die temporäre Adresse und den assoziierten Verschlüsselungsschlüssel für eine Supergruppenkommunikation;
Entschlüsseln (314) verschlüsselter Supergruppeninformation unter Nutzung des Verschlüsselungsschlüssels, der von dem Speicher zurückgewonnen wurde, um eine Ende-zu-Ende-Verschlüsselung der Supergruppeninformation zu erlauben, wobei die Supergruppeninformation irgendein Typ von Daten ist, die zwischen drahtlosen Kommunikationsgeräten ausgetauscht werden können, die ein Teil einer Supergruppe sind; und
Zurückkehren (322) zu der Sprechgruppenadresse und zu dem assoziierten Verschlüsselungsschlüssel von der temporären Adresse und dem assoziierten Verschlüsselungsschlüssel in Reaktion auf ein Beenden der Supergruppenkommunikation.

## Revendications

1. Procédé de transmission d'informations de super groupe chiffrées de bout en bout, le procédé comprenant les étapes ci-dessous consistant à :
transmettre (308) des données d'adresse temporaire qui identifient une adresse temporaire utilisée pour un super groupe, d'une passerelle (210) à un dispositif de communication dos à dos (206), la passerelle fournissant une connexion entre le dispositif de communication dos à dos (206) et une infrastructure de gestion et de commutation partagée (260), dans lequel le super groupe englobe une pluralité de groupes de discussion, dans lequel le dispositif de communication dos à dos est un dispositif de communication sans fil qui est en mesure de communiquer avec un autre dispositif de communication sans fil sans utiliser une infrastructure, dans lequel les données d'adresse temporaire identifient une fréquence ou un canal utilisé(e) pour le super groupe, et dans lequel le dispositif de communication dos à dos est un membre d'un groupe de discussion de la pluralité de groupes de discussion présentant une adresse de groupe de discussion différente des données d'adresse temporaire ;
extraire (312), d'une mémoire de stockage dans le dispositif de communication dos à dos (206), une clé de chiffrement associée à l'adresse temporaire, dans lequel l'adresse de groupe de discussion est associée à une clé de chiffrement différente de la clé de chiffrement associée aux données d'adresse temporaire ;
remplacer, par le biais du dispositif de communication dos à dos (206), l'adresse de groupe de discussion et la clé de chiffrement associée, par l'adresse temporaire et la clé de chiffrement associée pour une communication de super groupe ;
déchiffrer (314) des informations de super groupe chiffrées au niveau du dispositif de communication dos à dos (206), en utilisant la clé de chiffrement extraite de la mémoire de stockage, en vue de permettre un chiffrement de bout en bout des informations de super groupe, dans lequel les informations de super groupe correspondent à tout type de données qui peuvent être échangées entre des dispositifs de communication sans fil qui font partie d'un super groupe ; et
revenir (322), par le biais du dispositif de communication dos à dos (206), à l'adresse de groupe de discussion et à la clé de chiffrement associée, à partir de l'adresse temporaire et de la clé de chiffrement associée, en réponse à l'achèvement de la communication de super groupe.

2. Procédé selon la revendication 1, dans lequel les données d'adresse temporaire sont transmises dans un message de données.

3. Procédé selon la revendication 2, dans lequel le message de données est un message textuel.

4. Procédé selon la revendication 3, dans lequel un identificateur de protocole unique est affecté au message textuel pour indiquer qu'une chaîne de données suivant l'identificateur de protocole est l'adresse temporaire, et pour différencier par conséquent le message textuel d'autres messages textuels.

5. Procédé selon la revendication 1, dans lequel l'utilisation de l'adresse temporaire est détectée par la passerelle (210) dans un message de protocole TETRA qui inclut des données d'identification standard en mode partagé.

6. Procédé selon la revendication 1, comprenant en outre l'étape consistant à recevoir, au niveau de la passerelle (210), des données d'adresse temporaire provenant de l'infrastructure de gestion et de commutation partagée.

7. Procédé selon la revendication 1, comprenant en outre l'étape consistant à utiliser un message de protocole TETRA qui inclut des données d'identification standard en mode direct en vue de transmettre l'adresse temporaire utilisée pour les informations de super groupe au dispositif de communication dos à dos (206).

8. Procédé selon la revendication 1, comprenant en outre l'étape consistant à retransmettre, à partir de la passerelle (210), les informations chiffrées de bout en bout, sur l'adresse temporaire, uniquement à l'issue de la transmission des données d'adresse temporaire.

9. Procédé selon la revendication 1, comprenant en outre l'étape dans laquelle la passerelle (210) transmet (316, 318, 320), au dispositif de communication dos à dos (206), des données de communication en cours, périodiquement, tandis qu'une communication de super groupe est en cours, et des données de communication non en cours, pour indiquer l'achèvement de la communication de super groupe.

10. Procédé selon la revendication 9, dans lequel les données de communication en cours et les données de communication non en cours correspondent à des messages DM-INFO dans lesquels un champ de type d'informations « Information Type » est défini sur une valeur unique en vue d'indiquer qu'une communication de super groupe est en cours, et il est réinitialisé dès lors que la communication de super groupe n'est pas en cours.

11. Procédé (300) selon la revendication 1, dans lequel l'infrastructure de gestion et de commutation partagée (260) comprend une infrastructure de gestion et de commutation de fonctionnement en mode partagé, TMO, dans lequel la passerelle (210) comprend une passerelle vers l'infrastructure de commutation et de gestion de fonctionnement TMO, le procédé comprenant en outre les étapes ci-dessous consistant à :
initier (304) une communication de super groupe par le biais d'un dispositif de communication en réseau (208) au sein de l'infrastructure de gestion et de commutation de fonctionnement en mode partagé, TMO, (260) ;
transmettre (308) les données d'adresse temporaire, de l'infrastructure de gestion et de commutation de fonctionnement TMO à la passerelle (210) ;
communiquer (310), entre le dispositif de communication dos à dos (206) et le dispositif de communication en réseau (208), des informations de super groupe, en utilisant la clé de chiffrement de super groupe.

12. Procédé (300) selon la revendication 11, comprenant en outre l'étape consistant à retransmettre les informations de super groupe chiffrées à partir de la passerelle uniquement après la transmission des données d'adresse temporaire.

13. Procédé (300) selon la revendication 11, comprenant en outre les étapes dans lesquelles le dispositif de communication dos à dos (206) et le dispositif de communication en réseau (208) reçoivent (316, 318, 320) :
(i) des données de communication en cours, périodiquement, tandis qu'une communication de super groupe est en cours ; et
(ii) des données de communication non en cours, pour indiquer l'achèvement de la communication de super groupe.

14. Système destiné à transmettre des informations de super groupe chiffrées de bout en bout, le système comprenant :
une passerelle (210) fournissant une connexion entre un dispositif de communication dos à dos (206) et une infrastructure de gestion et de commutation partagée (260), la passerelle étant configurée de manière à transmettre des données d'adresse temporaire qui identifient une adresse temporaire utilisée pour un super groupe, au dispositif de communication dos à dos (206), dans lequel le super groupe englobe une pluralité de groupes de discussion, dans lequel le dispositif de communication dos à dos est un dispositif de communication sans fil qui est en mesure de communiquer avec un autre dispositif de communication sans fil sans utiliser une infrastructure, et dans lequel les données d'adresse temporaire identifient une fréquence ou un canal utilisé(e) pour le super groupe, et dans lequel le dispositif de communication dos à dos est un membre d'un groupe de discussion de la pluralité de groupes de discussion présentant une adresse de groupe de discussion différente de l'adresse temporaire ;
le dispositif de communication dos à dos (206) étant configuré de manière à :
extraire (312), d'une mémoire de stockage, une clé de chiffrement associée à l'adresse temporaire, dans lequel l'adresse de groupe de discussion est associée à une clé de chiffrement différente de la clé de chiffrement associée à l'adresse temporaire ;
remplacer l'adresse de groupe de discussion et la clé de chiffrement associée, par l'adresse temporaire et la clé de chiffrement associée pour une communication de super groupe ;
déchiffrer (314) des informations de super groupe chiffrées, en utilisant la clé de chiffrement extraite de la mémoire de stockage, en vue de permettre un chiffrement de bout en bout des informations de super groupe, dans lequel les informations de super groupe correspondent à tout type de données qui peuvent être échangées entre des dispositifs de communication sans fil qui font partie d'un super groupe ; et
revenir (322) à l'adresse de groupe de discussion et à la clé de chiffrement associée, à partir de l'adresse temporaire et de la clé de chiffrement associée, en réponse à l'achèvement de la communication de super groupe.
